# EUROPEAN PATENT SPECIFICATION

(11) **EP 1 894 183 B1**
(45) Date of publication and mention of the grant of the patent: **30.03.2022**
(21) Application number: 06747487.4
(22) Date of filing: 02.06.2006
(51) Int. Cl.: H04L 29/08, G08G 1/09, H04H 20/55

(54) **METHOD AND AN APPARATUS FOR TRANSMITTING AND RECEIVING TRAFFIC INFORMATION BY USING FILE TRANSFER**
VERFAHREN UND VORRICHTUNG ZUM SENDEN UND EMPFANGEN VON VERKEHRSINFORMATIONEN DURCH VERWENDUNG VON DATEITRANSFER
METHODE ET APPAREIL POUR EMETTRE ET POUR RECEVOIR DES INFORMATIONS DE CIRCULATION A L'AIDE D'UN TRANSFERT DE FICHIERS

(30) Priority: 13.06.2005 KR 20050050411
(43) Date of publication of application: 05.03.2008
(73) Proprietor: LG Electronics Inc., SEOUL, 07336 (KR)
(72) Inventor: KIM, Jun, Seoul 137-779 (KR); MOON, Kyoung Soo, Seoul 137-784 (KR); LEE, Sang Hyup, Pyeongtaek-si, Gyeonggi-do 451-713 (KR)
(74) Representative: Ter Meer Steinmeister & Partner
(86) International application number: PCT/KR2006/002129
(87) International publication number: WO 2006/135161

(56) References cited:
- WO-A1-02/13161
- DE-A1- 19 914 041
- JP-A- 2004 146 948
- KR-A- 970 022 886
- KR-A- 20010 053 697
- KR-A- 20040 006 165
- KR-A- 20060 021 727
- US-A- 5 570 361
- US-A1- 2003 125 867
- US-A1- 2005 093 720
- "Radio Broadcasting Systems; Digital Audio Broadcasting (DAB) to mobile, portable and fixed receivers; ETSI EN 300 401", EUROPEAN STANDARD (TELECOMMUNICATIONS SERIES), EUROPEAN TELECOMMUNICATIONS STANDARDS INSTITUTE (ETSI), 650 ROUTE DES LUCIOLES, SOPHIA ANTIPOLIS CEDEX, F-06921, FRANCE, vol. BC, no. V1.3.3, 1 May 2001 (2001-05-01), XP014001360,

## Description

### 1. TECHNICAL FIELD

The present invention relates to a method and an apparatus for providing road traffic information and obtaining the provided information.

### 2. BACKGROUND ART

With the advancement in digital signal processing and communications technology, radio and TV broadcasts are in the process of being digitized. Digital broadcast can provide various information as well as audio and video contents, where news, stock, weather, traffic information, etc are a few examples to be contained.

In particular, the necessity for traffic information is constantly increasing with the increment of the number of vehicles in downtown areas, the number of vehicles during holidays, and so on. Accordingly, methods for providing traffic information as auxiliary information via satellite or terrestrial broadcast are under development.

Traffic information requires a standard format because traffic information receiving terminals made by different manufacturers should be able to catch and interpret broadcast traffic information in the same way.

US 2003/125867 A1 describes a device, system, and method for a portable handheld device for displaying information, including traffic information. The device includes a visual display having a plurality of individually controllable display elements corresponding to road-display segments, each element corresponding to a road-display segment and being arranged to display a plurality of visual properties each representing a different traffic condition, e.g. off, slow flash, fast flash, or solid on. In one example, eight traffic LCD segments which are contained in two bytes of traffic data are encoded.

WO 02/13161 A1 describes a method for transmitting digitally encoded traffic messages according to a standardized pattern. A header is prefixed to the digitally encoded traffic messages, at least one further information following said digitally encoded traffic message and one of these pieces of information containing a location description. The further pieces of information are subdivided into classes, every class containing a class name and at least one packet. One of these classes contains data of presentation.

DE 199 14 041 A1 describes a method for informing motor vehicle drivers, in which digitally coded traffic messages are received and buffered, and a time stamp is stored in memory with each of the traffic messages received. A measure for the duration of the event and/or the change of its extent is derived from extents and the time stamps of stored traffic messages relating to the same event. The change is displayed.

US 2005/093720 A1 describes a traffic information providing system that externally acquires traffic information including information relating to the travel time of a link, and calculates a travel time for a non-provision link to which no travel time is provided through estimate/complement operation.

JP 2004-146948 A describes a data broadcast receiving apparatus and a data broadcast receiving method. Data for service is converted into data of a lower layer protocol and transmitted. In an example, there is described data broadcasting based on the DAB system, and the lower layer protocol is an MOT protocol for transporting files of various formats as the data for service, and an MSC (main service channel) for dividing and transporting MOT data according to the proto-col, and a protocol that defines a data group and a protocol that defines packets that divide and transport an MSC data group.

"Radio Broadcasting Systems; Digital Audio Broadcasting (DAB) to mobile, portable and fixed receivers", ETSI EN 300 401 V1.3.3 (2001-05), European Standard (Telecommunications series), European Telecommunications Standards Institute (ETSI), 650 Route des Lucioles, F-06921 Sophia Antipolis Cedex - FRANCE, XP014001360, describes that user application information provides signalling to allow data applications to be associated with the correct user application decoder by the receiver. In an example, a user application type field can have one of values including values for MOT Slide Show, MOT Broadcast Web Site, or TPEG.

### 3. DISCLOSURE OF INVENTION

By taking into account the necessity as described above, the present invention is directed to provide a means for providing drivers with useful traffic information via file transfer.

The invention is defined in the independent claims. Further embodiments are indicated in the dependent claims.

In one embodiment, the method is a method for providing traffic information to a navigation terminal, the method comprising:organizing a file containing traffic information as an object (400) of a first type and organizing information about a traffic information service providing the file and information about the file as an object of a second type;transmitting the organized objects to a receiving unit (1, 2) of the navigation terminal;extracting, via a first decoder (3 a) comprised in the receiving unit (1, 2) of the navigation terminal, the file containing traffic information from the received object (400) of the first type and the information about the traffic information service and the information about the file (40) from the received object of the second type;based on the extracted information about traffic information service, via a second decoder (3b) comprised in the receiving unit (1, 2) of the navigation terminal, determining decodability of traffic information contained in the extracted information, and based on the extracted information about the file, determining said file either to be decoded for utilizing traffic information or for updating traffic information;decoding the extracted file (40) based on the determining step via the second decoder (3b);obtaining information about a current location of the navigation terminal;providing the decoded traffic information contained in the extracted file (40) to a navigation engine (5) of the navigation terminal; anddisplaying a part of the decoded traffic information corresponding to road segments belonging to a particular region around the obtained current location.

In the embodiment in accordance with the present invention, a file containing traffic information, wherein traffic congestion information is contained, is transmitted by MOT (Multimedia Object Transfer) protocol.

In the embodiment in accordance with the present invention, an object of the first type is so configured that header core and header extension are included, an object of the second type not containing head core and header extension.

In the embodiment of the present invention, an object of the second type comprises directory extension containing at least one parameter and directory entries as many as the number of associated objects of the first type, the directory entry containing MOT header that is a duplicate of header core and header extension embedded in an object of the first type.

In the embodiment of the present invention, one parameter of the directory extension contains version information about service configuration format, sync information specifying time for synchronizing traffic information DB, and type information about transmitted files (e.g., information indicating either binary data or markup language data).

In the embodiment of the present invention, header extension of each MOT header contains a parameter for delivering transmitter-side DB version information of a file carried by an associated object and a parameter for delivering a name of a file carried by an associated object.

In the embodiment of the present invention, a filename consists of an ID assigned to a service provider or contents provider, service component identifier, digits corresponding to file number, and delimiters thereof.

### 4. BRIEF DESCRIPTION OF DRAWINGS

Fig. 1 illustrates a network through which traffic information is provided in accordance with the present invention;
Fig. 2 illustrates a provision format of traffic information transmitted wirelessly;
Fig.3a illustrates an example of information recorded in TPEG.txt that is necessary for transmitting traffic information in a file;
Fig. 3b illustrates an example of information recorded in Version.txt for delivering information about traffic information files;
Fig. 3c illustrates a series of files containing traffic information transmitted according to information stored in Version.txt of Fig. 3b;
Fig. 3d illustrates information contained in Version.txt and a series of files transmitted in accordance therewith when a contents provider transmits updated traffic information;
Fig. 4 illustrates MOT (Multimedia Object Transfer) protocol format through which each file containing traffic information is transmitted;
Fig. 5 illustrates a structure of a parameter contained in header extension for transmitting a filename;
Fig. 6 illustrates a structure of header core in an object;
Fig. 7 illustrates a structure of MOT directory in accordance with the present invention for transmitting information about a file wherein traffic information is recorded;
Fig. 8a illustrates a structure of a parameter contained in directory extension of Fig. 7 according to the present invention, the parameter carrying version information about service configuration format, synchronization information, and type information about transmitted files;
Fig. 8b illustrates a structure of a parameter contained in MOT header of Fig. 7 according to the present invention, the parameter carrying transmitter-side DB version about traffic information stored in a file; and
Fig. 9 illustrates a block diagram of a navigation terminal that receives traffic information transmitted via file transfer in accordance with one embodiment of the present invention.

### 5. MODES FOR CARRYING OUT THE INVENTION

Hereinafter, according to the present invention, preferred embodiments will be described in detail with reference to appended drawings.

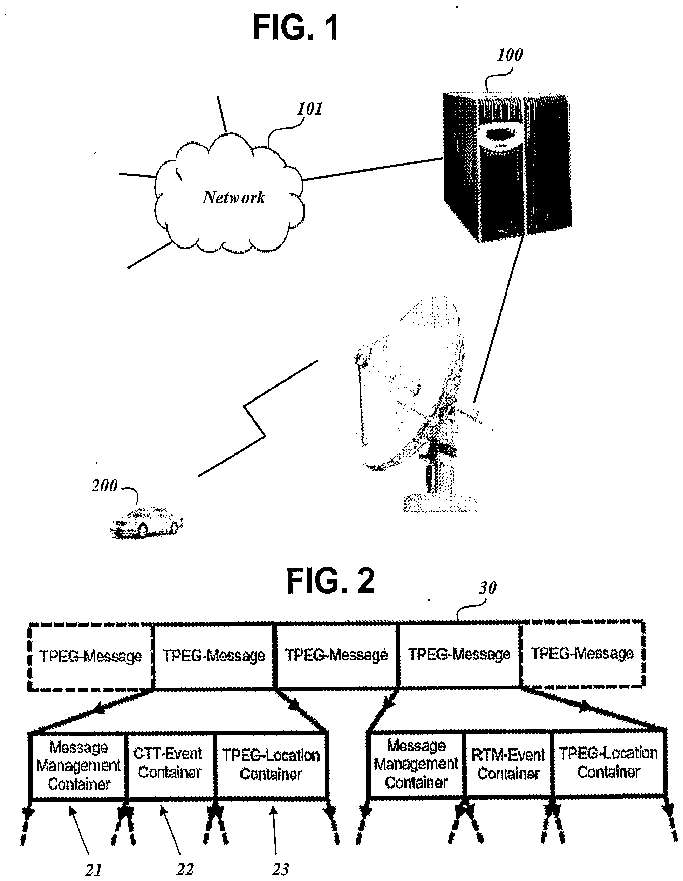

First of all, a method for providing traffic information wirelessly in accordance with the present invention is described. Fig. 1 is a schematic diagram of a network through which traffic information in accordance with the present invention is provided. A traffic information providing server 100 in a broadcast station reconfigures traffic information collected from various sources (e.g., operator input, information received from another server through a network 101 or probe cars) and transmits wirelessly so that a traffic information receiving terminal (e.g., a navigation apparatus) installed in a car 200 can receive the traffic information.

As shown in Fig. 2, a format of traffic information transmitted wirelessly from the traffic information providing server 100 can be composed of a sequence of message segments (hereinafter, message segment is referred to as TPEG (Transport Protocol Export Group) message). One message segment of the sequence (e.g., a TPEG message containing CTT (Congestion and Travel-Time) information---this message is referred to as TPEG-CTT message) comprises a message management container 21, CTT event container 22, and TPEG location container 23. CTT event contains information about traffic congestion status and the sequence may also include traffic information other than CTT event (e.g., a TPEG message 30 for transmitting road traffic information).

The message management container 21 contains information about date and time, message occurrence time, etc. The CTT event container 22 contains current congestion status information of each link (road segment), including average speed, travel time, delay time, and degree of congestion in a link. The TPEG location container 23 contains location information about the link.

In addition to the traffic congestion information, a variety of traffic information about road traffic can be provided in a format as shown in Fig. 2 and traffic information can also be provided via file transfer.

In the embodiment according to the present invention for providing traffic information via file transfer, TPEG.txt, Version.txt, and a file containing traffic informationeither '*.bin' file (when traffic information is provided by binary data) or '*.xml' file (when traffic information is provided by markup language)---are required to deliver traffic information such as CTT information (information other than CTT information, e.g., RTM information, can also be included).

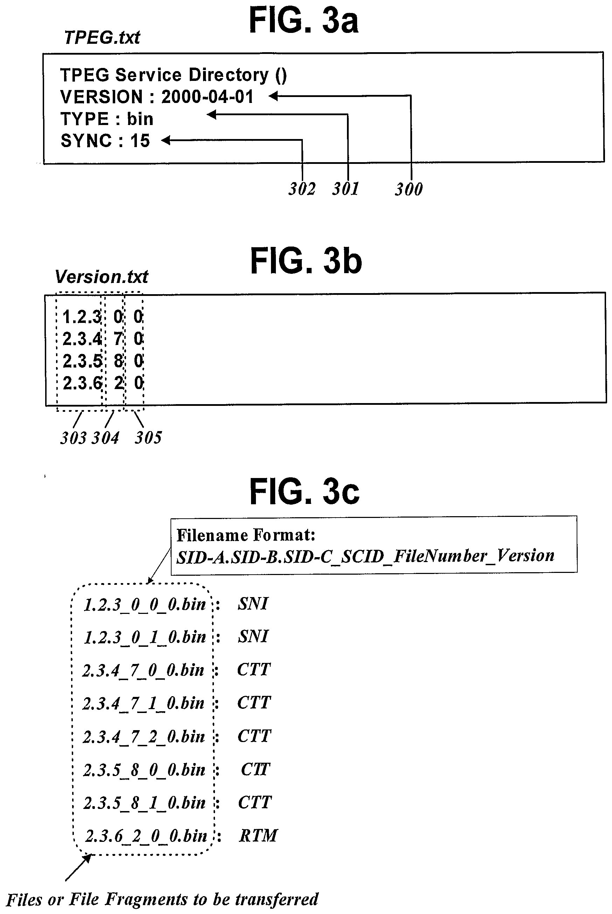

Fig. 3a illustrates an example of information recorded in TPEG.txt. TPEG.txt includes version information 300 about configuration format for traffic information service (the information is recorded in the form of "yyyy-mm-dd"); type information 301 about traffic information data carried by a file (binary data or xml script); and sync information 302 that defines the minimum time in units of minute to keep consistency between transmitter and receiver-side traffic information DB. Fig. 3b illustrates an exemplified Version.txt. As illustrated, Version.txt records information about a file carrying traffic information, the information including service identifier (SID) 303 for each file transfer (the identifier is designated by SID-A.SID-B.SID-C), service component ID (SCID) 304, and transmitter-side DB number 305. Fig. 3b deals with the case where four traffic information files are being transmitted.

As illustrated in Fig. 3c, the name of a file carrying traffic information (*.bin, *.xml) is designated in the form of SID-A.SID-B.SID-C_SCID_FileNumber_Version, implying ID assigned to a service provider or contents provider, service component ID, file number, digits corresponding to DB number, and delimiters ('_') thereof. Except for FileNumber element, each name of a file is the same as information about the file contained in Version.txt. FileNumber element is intended for recording the sequential number of a file fragment when the original file is so partitioned by the server 100 as to be appropriate for file transfer (e.g., via MOT protocol). MOT protocol treats each file fragment as a single file (a file is encapsulated into an object); when an MOT decoder at receiver side decodes and delivers each object to an upper application, the application integrates file segments into a single file and interprets traffic information contained in the file.

Fig. 3c illustrates a series of files carrying traffic information, the files being transmitted in accordance with the information stored in Version.txt of Fig. 3b; a broadcast station having an SID of 1.2.3 (SCID is 0 by default) transmits a file carrying service and network information (SNI) by partitioning the file into two file fragments and a contents provider having an SID of 2.3.4 (SCID = 7) transmits traffic congestion information by using three file fragments.

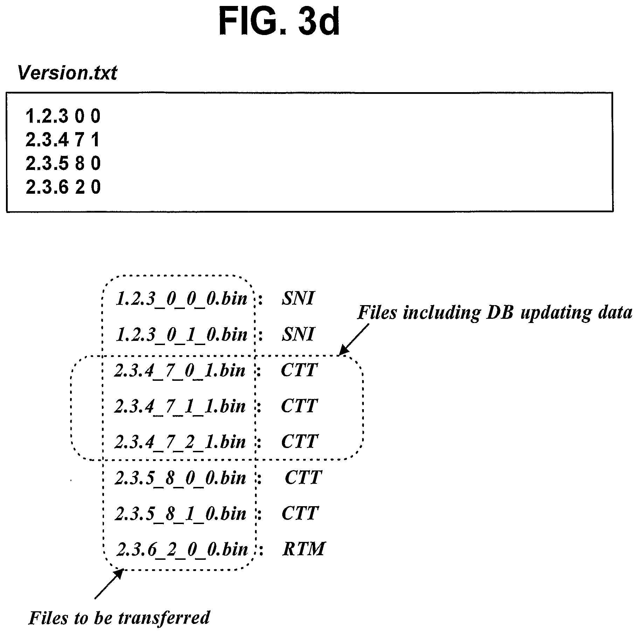

Henceforth, in order to transmit updated traffic information against provided traffic information, DB number in the filename of a file having updated traffic information is incremented. Fig. 3d illustrates information stored in Version.txt, files transmitted in accordance therewith, and corresponding names when a contents provider (SCID = 7) having SID of 2.3.4 transmits updated traffic information. In comparison with the information of Fig. 3b, 2.3.4 7 0 has been changed to 2.3.4 7 1; information regarding to version information has been changed from 2.3.4_7_x_0.bin to 2.3.4_7_x_1.bin when compared with the case of Fig. 3c.

A traffic information file contains traffic information in binary data that is transmitted in the form of a message sequence as shown in Fig. 2; several data that are required for frame structure carrying a message sequence can be removed in file transfer framework. For instance, frame sync word is removed since it is unnecessary for file transfer; likewise, frame size is also removed since file size is transmitted instead. In addition, SID, SCID and frame type are also removed since they are transmitted being included in a file name. CRC data of frame header is necessarily removed since error correction is carried out according to file transfer protocol.

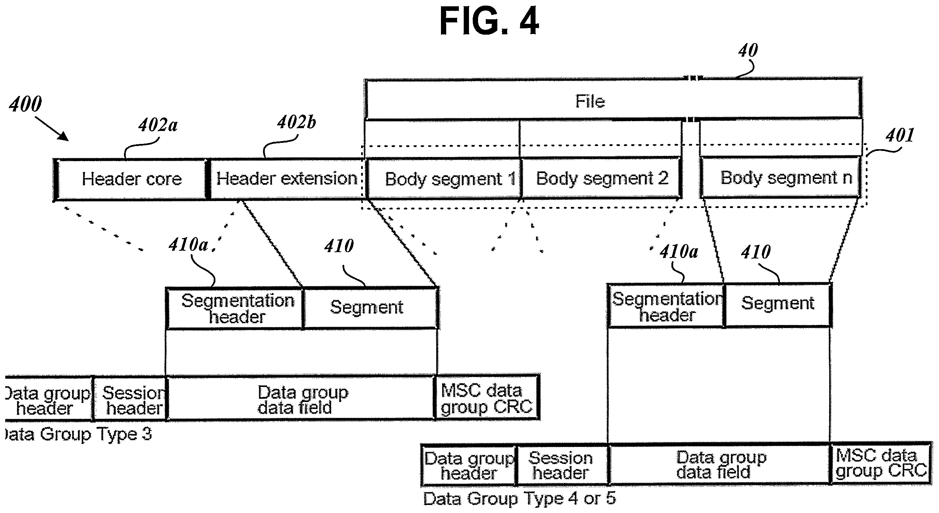

Fig. 4 illustrates a transfer format when each file (or each file fragment) containing traffic information such as aforementioned TPEG.txt, Version.txt, or binary data files (*.bin) is transmitted via file transfer (e.g., MOT protocol). In this case, MOT protocol is one of examples for file transfer; each file containing traffic information can be transmitted by using another method from among various protocols defined for file transfer. Therefore, the present invention is not limited to the invention based on MOT protocol only.

As illustrated in Fig. 4, a file or file fragment 40 is transmitted as an object 400, the object comprising a body 401 where the file or file fragment 40 is contained, header core 402a and header extension 402b located ahead of the body. An object 400 is partitioned and transmitted by units of a segment. Segment header 410a containing information such as segment size is supplemented to each segment 410; each segment 410 and its header 410a are transmitted being carried in a data group. Data belonging to header 402a, 402b and data belonging to body 401 are so partitioned that they are not intermixed in the same segment. A segment originating from header is transmitted being carried in data group designated as type 3, whereas a segment from body is carried in data group of type 4 or 5.

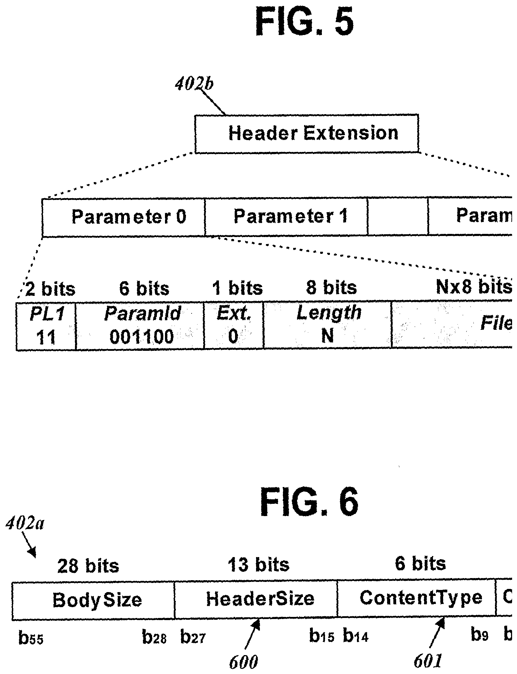

Filename of each file that is carried by body 401 is transmitted being contained in a parameter as shown in Fig. 5. The size of the entire header including header extension is recorded in 13-bits of HeaderSize 600 field within header core 402a having a structure as illustrated in Fig. 6. 6-bits of ContentType 601 field within header core 402a carries a value indicating contents type 602 of succeeding body, namely, a value indicating traffic information such as '111110'.

Accordingly, MOT decoder that receives MOT streams transmitted in the form as shown in Figs. 4 to 6 reconstructs data contained in the body of each object into files having filenames as specified in header extension, namely, TPEG.txt, Version.txt, and binary data files (*.bin) as shown in Fig. 3c. Subsequently, an application utilizing traffic information, that is to say, an application equipped with TPEG decoding function, based on version information in so extracted TPEG.txt, determines decodability of traffic information contained in binary data files; and based on information about each file contained in Version.txt, determines each file from among reconstructed files either to be decoded for utilizing traffic information or to be used for updating pre-interpreted traffic information. On one hand, according to a specific function, the application equipped with TPEG decoding function can include both TPEG-CTT decoding module for decoding traffic congestion information and TPEG-RTM decoding module for decoding road traffic information (RTM event information), or either of the two.

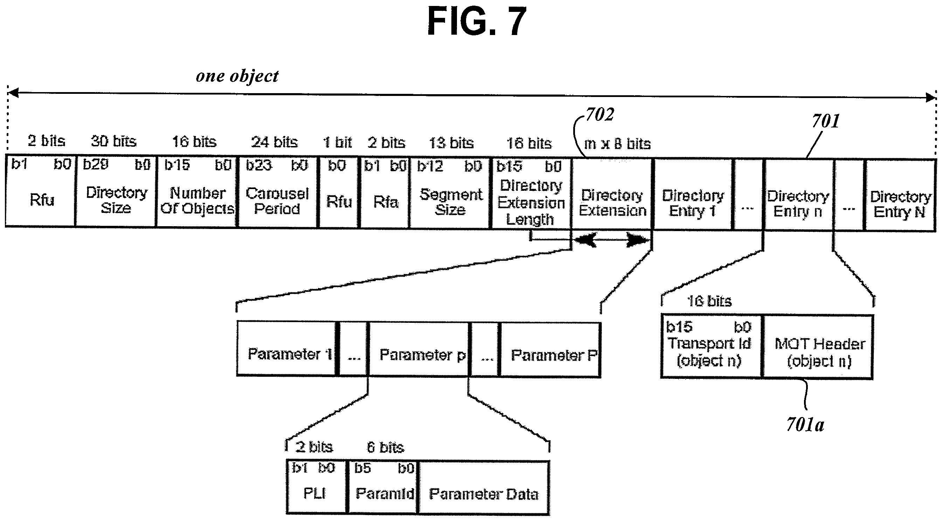

In the preferred embodiment for providing traffic information via file transfer in accordance with the present invention, information described to be transmitted through TPEG.txt and Version.txt in the previous embodiment is transmitted by using MOT directory having a structure of Fig. 7.

MOT directory is transmitted as an object different from an object for file transfer. MOT directory dose not contain a header differently from an object 400 for file transfer, but contains a group of directory entries 701, each of which contains MOT header 701a that is a duplicate of header information 402a, 402b of an object carrying each file containing traffic information. Directory entry group comprises directory entries corresponding to respective objects contained in a carrousel that is a unit for carrying a set of associated files. MOT directory also contains directory extension 702 where parameters commonly applicable to all the objects associated by directory entries are recorded. Each segment partitioned from MOT directory is transmitted, being carried by data group designated as type 6.

Therefore, in the present embodiment, information, which, in the previous embodiment, is transmitted being recorded in TPEG.txt, is transmitted through one or more than one parameter in the directory extension 702; information about each traffic information file carried by Version.txt is transmitted being recorded to each directory entry (by duplicating header information of an object carrying a corresponding file).

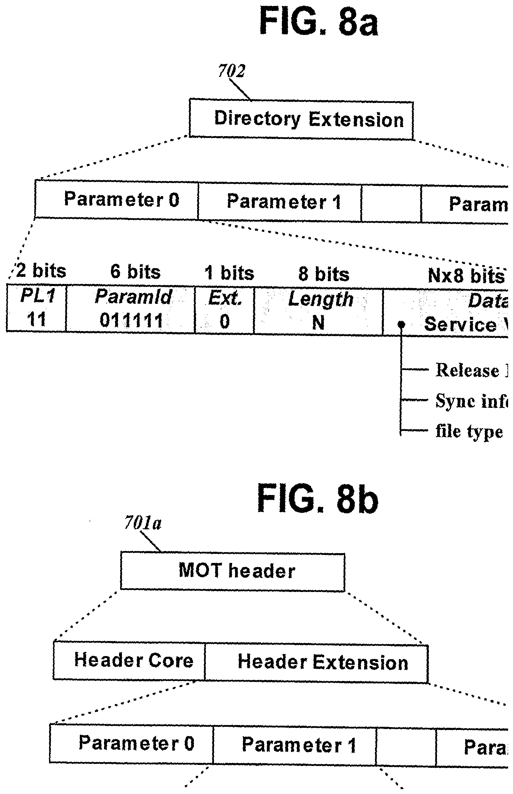

Fig. 8a illustrates a structure of a parameter contained in directory extension 702 of Fig. 7, the parameter carrying version information about service configuration format, sync information, and type information about transmitted files. Fig. 8a shows a parameter of the same structure as that of Fig. 5. In data field of a parameter, version (it is expressed in the form of "yyyy-mm-dd"), sync information (a value expressed in units of minute), and a value that indicates whether file type is of binary data or markup language data. As a parameter ID indicating that those values are recorded, a value of "011111" is assigned to the parameter. The data field is extracted by MOT decoder at receiver and interpreted by a traffic information application (e.g., TPEG decoder).

For each directory entry, one parameter of MOT header 701a duplicated from header of an object carrying a file records transmitter-side DB version information of a file associated with the object. Fig. 8b shows a structure of a parameter that transmits DB version. Since version information of traffic information DB contained in a file (a circulating value that ranges between 0 and 255) is carried by a parameter, each filename is designated in the format of SID-A.SID-B.SID-C_SCID_FileNumber. That is to say, each filename comprises an ID assigned to a service provider or contents provider, service component ID, digits corresponding to file number, and delimiters ('_') thereof. The filename is also carried with a structure of Fig. 5 in MOT header of a directory entry 701a of MOT directory having the structure of Fig. 7.

When MOT decoder that receives MOT stream containing MOT directory of Fig. 7 parses directory extension 702 and MOT headers 701a within MOT directory, an application for traffic information, namely, an application equipped with TPEG decoding function (application that decodes CTT and RTM information), based on version information of service configuration format within directory extension 702, determines decodability of traffic information contained in a binary data file; based on information about respective files embedded in each MOT header 701a, the application determines each file either to be decoded for utilizing traffic information or to be used for updating pre-interpreted traffic information from among files that the MOT decoder has extracted from the body of each object.

On the other hand, it is also allowable that service ID (SID) for a provider who provides service or contents of traffic information, service component identifier (SCID), and information about a file sequence, being embedded in separately defined parameters and inserted in header extension 402b of each object, are transmitted (In an embodiment wherein MOT directory is transmitted, information of header extension is also transmitted by each directory entry 701); and filename to be transmitted can be arbitrarily assigned. In such embodiment, a traffic information application does not have to parse filename of a received file.

As to transmitting traffic information via file transfer described so far, data in a file can be transmitted by using one of commonly known data compression methods.

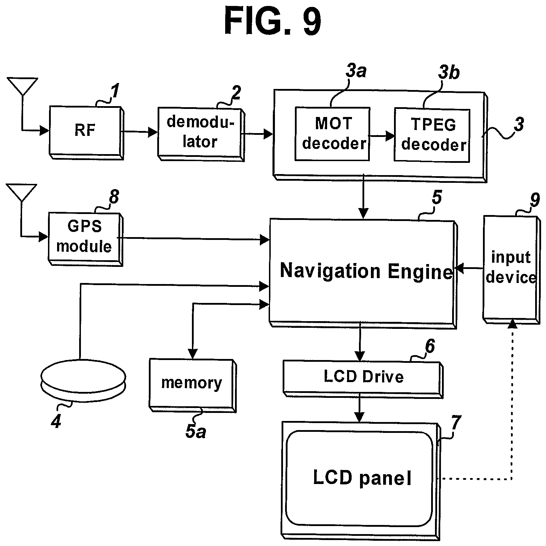

Fig. 9 is a block diagram of a navigation terminal that receives traffic information transmitted from the server 100 via file transfer in accordance with one embodiment of the invention. The navigation terminal comprises a tuner 1 resonating at the required frequency band of received traffic information signals, a demodulator 2 for outputting traffic information signals embedded in the resonated frequency band, a decoder 3 for obtaining traffic information by decoding the demodulated traffic information signals, a GPS module 8 for calculating the current position (i.e., latitude, longitude, and altitude) by receiving signals from a plurality of satellites, storage means 4 for storing various graphic data and an electronic map including information on links and nodes, an input unit 9 for receiving user input, a navigation engine 5 for controlling screen display based on the user input, the current position, and obtained traffic information, a memory 5a for storing data temporarily, an LCD panel 7 for displaying data, and an LCD drive 6 for driving the LCD panel 7 according to data to be presented. The input unit 9 may be a touch screen incorporated into the LCD panel 7.

The decoder 3 includes MOT decoder 3a and TPEG decoder 3b. When MOT streams are transmitted in the form as shown in Figs. 4 to 6, TPEG.txt, Version.txt, and traffic information files in a format of binary data or markup language are extracted from each object by the MOT decoder 3a, which are delivered to succeeding TPEG decoder 3b. The TPEG decoder 3b, based on version and file type information embedded in the extracted TPEG.txt, determines decodability of traffic information in binary data (or markup language data) file and determines each file either to be decoded for utilizing traffic information or to be used for updating pre-interpreted traffic information from among the extracted files based on each file information embedded in Version.txt, traffic information in the determined file (a merged file from file fragments when the determined files are file fragments) being interpreted in accordance with the identified file type information. At this stage, depending on the contents, traffic information in a file is decoded and interpreted by a corresponding decoding module in the TPEG decoder 3b. For example, CTT information is decoded by TPEG-CTT decoding module, whereas RTM event information is decoded by TPEG-RTM decoding module. When the TPEG decoder 3b can handle one particular type only (e.g., CTT information), files carrying traffic information of different types other than CTT information are ignored.

Received data and extracted file data are stored temporarily in the memory 5a until traffic information is decoded completely. When data of a received file contains compressed data, the TPEG decoder 3b runs a particular application, thereby reconstructing the original uncompressed data from the compressed data.

When MOT streams are transferred in the form as shown in Figs. 4 to 7, the MOT decoder 3a extracts directory extension information of MOT directory and MOT header of each directory entry to deliver to the TPEG decoder 3b. Each traffic information file of binary or markup language format from each object is also extracted by the MOT decoder 3a and delivered to the TPEG decoder 3b. When additional information necessary for decoding traffic information is contained in MOT directory, the information is also delivered to the TPEG decoder 3b. The TPEG decoder 3b, based on version and file type information carried by a parameter in the extracted directory extension, determines decodability of traffic information in binary data (or markup language data) file and determines each file either to be decoded for utilizing traffic information or to be used for updating pre-interpreted traffic information from among extracted files based on information about each file embedded in each MOT header, traffic information in the determined file (a merged file from file fragments when the determined files are file fragments) being interpreted in accordance with the identified file type information.

When received traffic information data is binary data, the TPEG decoder 3 interprets each TPEG message in a file and delivers required information and/or control signals in accordance with the content of the message to the navigation engine 5. To be more specific, the TPEG decoder 3 extracts date/time in message management container of each TPEG message and message occurrence time; and identifies a succeeding container (for example, CTT, RTM Event container) by using the information of 'message element'. If the succeeding container turns out to be CTT event container, information obtained from the container is delivered in order for the navigation engine 5 to display traffic information. On one hand, location information corresponding to currently delivered traffic information is obtained from a succeeding TPEG location container; the location information, depending on type information of TPEG location container, can be either location coordinates (latitude and longitude) of start position and end position or a link, namely, link ID assigned to a road segment. If the navigation terminal is equipped with the storage means 4, the navigation engine 5 finds the link location about which the received information is created with reference to information on each link and node stored in the storage means 4. If necessary, the navigation engine 5 converts the coordinates of the link into the link ID or vice versa.

The navigation engine 5 reads a part of the electronic map centered on the position coordinates received from the GPS module 8 from the storage means 4 and displays the map on the LCD panel 7 via the LCD drive 6. A particular graphic symbol is displayed at the location corresponding to current position on the LCD panel 7.

The navigation engine 5 displays traffic information received from the decoder 3 (e.g., average speed information of a link) at a location corresponding to the coordinate or link ID delivered via the location container following the container delivering the average speed information.

Upon the user request, the navigation engine 5 displays travel time in a link and degree of congestion received from the decoder 3 on the LCD panel 7 instead of or with average speed in a link.

The present invention allows the driver to arrive at a destination in shorter time by providing estimated congestion and travel time information for the driver and effectively disperses the amount of traffic in big cities, thereby promoting effective use of road resources. In particular, since traffic information is provided via file transfer, bandwidth of transfer channel is cut down since data overhead imposed on each frame unit is decreased; moreover, the number of transmitted files is reduced if MOT directory is utilized.

The foregoing description of a preferred embodiment of the present invention has been presented for purposes of illustration.

## Claims

1. A method for providing traffic information to a navigation terminal, the method comprising:
organizing a file containing traffic information as an object (400) of a first type and organizing information about a traffic information service providing the file and information about the file as an object of a second type;
transmitting the organized objects to a receiving unit (1, 2) of the navigation terminal;
extracting, via a first decoder (3a) comprised in the receiving unit (1, 2) of the navigation terminal, the file containing traffic information from the received object (400) of the first type and the information about the traffic information service and the information about the file (40) from the received object of the second type;
based on the extracted information about traffic information service, via a second decoder (3b) comprised in the receiving unit (1, 2) of the navigation terminal, determining decodability of traffic information contained in the extracted information, and based on the extracted information about the file, determining said file either to be decoded for utilizing traffic information or for updating traffic information;
decoding the extracted file (40) based on the determining step via the second decoder (3b);
obtaining information about a current location of the navigation terminal;
providing the decoded traffic information contained in the extracted file (40) to a navigation engine (5) of the navigation terminal; and
displaying a part of the decoded traffic information corresponding to road segments belonging to a particular region around the obtained current location.

2. The method of claim 1, wherein a filename of the file (40) includes an identification (303) assigned to the traffic information service providing the traffic information, a service component identifier (304), a file number and delimiters.

3. An apparatus for receiving traffic information, the apparatus comprising:
a receiving unit (1,2) configured to receive an object (400) of a first type having a file (40) containing traffic information and an object of a second type including information about the file and information about a traffic information service providing the file;
a first decoder (3a) configured to extract the file (40) containing traffic information from the object (400) of the first type, and the information about the file (40) and the information about the traffic information service from the object of the second type;
a second decoder (3b) configured to determine decodability of traffic information contained in the extracted information about traffic information service, based on the extracted information about traffic information service, and to determine the file either to be decoded for utilizing traffic information or for updating traffic information, based on the extracted information about the file, and to decode the extracted file (40);
a location detector (8) configured to obtain information about a current location of the apparatus; and
a navigation engine (5),
wherein the second decoder (3b) is configured to provide the decoded traffic information contained in the extracted file (40) to the navigation engine (5),
wherein the navigation engine (5) is configured to store the decoded traffic information and to display a part of the decoded traffic information corresponding to road segments belonging to a particular region around the obtained current location.

4. The apparatus of claim 3, wherein a filename of the file (40) includes an identification (303) assigned to the traffic information service providing the traffic information, a service component identifier (304), a file number and delimiters.

## Patentansprüche

1. Verfahren zum Liefern von Verkehrsinformationen an ein Navigationsendgerät, wobei das Verfahren umfasst:
Organisieren einer Datei, die Verkehrsinformationen enthält, als ein Objekt (400) eines ersten Typs und Organisieren von Informationen über einen Verkehrsinformationsdienst, der die Datei liefert, und Informationen über die Datei als ein Objekt eines zweiten Typs;
Senden der organisierten Objekte an eine Empfangseinheit (1, 2) des Navigationsendgeräts;
Extrahieren über einen ersten Decodierer (3a), der in der Empfangseinheit (1, 2) des Navigationsendgeräts enthalten ist, der Datei, die Verkehrsinformationen enthält, aus dem empfangenen Objekt (400) des ersten Typs, und der Informationen über den Verkehrsinformationsdienst und der Informationen über die Datei (40) aus dem empfangenen Objekt des zweiten Typs;
anhand der extrahierten Informationen über einen Verkehrsinformationsdienst über einen zweiten Decodierer (3b), der in der Empfangseinheit (1, 2) des Navigationsendgeräts enthalten ist, Bestimmen einer Decodierbarkeit von Verkehrsinformationen, die in den extrahierten Informationen enthalten sind, und anhand der extrahierten Informationen über die Datei Bestimmen, dass die Datei entweder decodiert wird, um Verkehrsinformationen zu verwenden oder um Verkehrsinformationen zu aktualisieren;
Decodieren der extrahierten Datei (40) anhand des Bestimmungsschritts über den zweiten Decodierer (3b);
Erhalten von Informationen über einen aktuellen Standort des Navigationsendgeräts;
Liefern der decodierten Verkehrsinformationen, die in der extrahierten Datei (40) enthalten sind, an eine Navigationsmaschine (5) des Navigationsendgeräts; und
Anzeigen eines Teils der decodierten Verkehrsinformationen, die Straßensegmenten entsprechen, die zu einem bestimmten Bereich um den erhaltenen aktuellen Standort gehören.

2. Verfahren nach Anspruch 1, wobei ein Dateiname der Datei (40) eine Identifikation (303), die dem Verkehrsinformationsdienst zugewiesen ist, der die Verkehrsinformationen liefert, eine Dienstkomponentenkennung (304), eine Dateinummer und Trennsymbole enthält.

3. Vorrichtung zum Empfangen von Verkehrsinformationen, wobei die Vorrichtung umfasst:
eine Empfangseinheit (1, 2), die konfiguriert ist, ein Objekt (400) eines ersten Typs mit einer Datei (40), die Verkehrsinformationen enthält, und ein Objekt eines zweiten Typs, das Informationen über die Datei und Informationen über einen Verkehrsinformationsdienst, der die Datei liefert, enthält, zu empfangen;
einen ersten Decodierer (3a), der konfiguriert ist, die Datei (40), die Verkehrsinformationen enthält, aus dem empfangenen Objekt (400) des ersten Typs und die Informationen über die Datei (40) und die Informationen über den Verkehrsinformationsdienst aus dem Objekt des zweiten Typs zu extrahieren;
einen zweiten Decodierer (3b), der konfiguriert ist, eine Decodierbarkeit von Verkehrsinformationen, die in den extrahierten Informationen über den Verkehrsinformationsdienst enthalten sind, anhand der extrahierten Informationen über den Verkehrsinformationsdienst zu bestimmen und anhand der extrahierten Informationen über die Datei zu bestimmen, dass die Datei entweder decodiert wird, um Verkehrsinformationen zu verwenden oder um Verkehrsinformationen zu aktualisieren, und die extrahierte Datei (40) zu decodieren;
einen Standortdetektor (8), der konfiguriert ist, Informationen über einen aktuellen Standort der Vorrichtung zu erhalten; und
eine Navigationsmaschine (5),
wobei der zweite Decodierer (3b) konfiguriert ist, die decodierten Verkehrsinformationen, die in der extrahierten Datei (40) enthalten sind, an die Navigationsmaschine (5) zu liefern,
wobei die Navigationsmaschine (5) konfiguriert ist, die decodierten Verkehrsinformationen zu speichern und einen Teil der decodierten Verkehrsinformationen, die Straßensegmenten entsprechen, die zu einem bestimmten Bereich um den erhaltenen aktuellen Standort gehören, anzuzeigen.

4. Vorrichtung nach Anspruch 3, wobei ein Dateiname der Datei (40) eine Identifikation (303), die dem Verkehrsinformationsdienst, der die Verkehrsinformationen liefert, zugewiesen ist, eine Dienstkomponentenkennung (304), eine Dateinummer und Trennsymbole enthält.

## Revendications

1. Procédé pour fournir de l'information sur le trafic à un terminal de navigation, le procédé comportant les étapes consistant à :
organiser un fichier contenant de l'information sur le trafic comme un objet (400) d'un premier type et organiser de l'information concernant un service d'information sur le trafic fournissant le fichier et de l'information concernant le fichier comme un objet d'un second type ;
transmettre les objets organisés à une unité de réception (1, 2) du terminal de navigation ;
extraire, via un premier décodeur (3a) inclus dans l'unité de réception (1, 2) du terminal de navigation, le fichier contenant l'information sur le trafic de l'objet reçu (400) du premier type et l'information concernant le service d'information sur le trafic et l'information concernant le fichier (40) de l'objet reçu du second type ;
sur la base de l'information extraite concernant le service d'information sur le trafic, via un second décodeur (3b) inclus dans l'unité de réception (1, 2) du terminal de navigation, déterminer la décodabilité de l'information sur le trafic contenue dans l'information extraite, et sur la base de l'information extraite concernant le fichier, déterminer que ledit fichier doit être décodé soit pour utiliser l'information sur le trafic, soit pour mettre à jour l'information sur le trafic ;
décoder le fichier extrait (40) sur la base de l'étape de détermination via le second décodeur (3b) ;
obtenir de l'information concernant une localisation actuelle du terminal de navigation ;
fournir l'information sur le trafic décodée contenue dans le fichier extrait (40) à un moteur de navigation (5) du terminal de navigation ; et
afficher une partie de l'information sur le trafic décodée correspondant à des segments routiers appartenant à une zone particulière autour de la localisation actuelle obtenue.

2. Procédé selon la revendication 1, dans lequel un nom de fichier du fichier (40) inclut une identification (303) attribuée au service d'information sur le trafic fournissant l'information sur le trafic, un identifiant de composant de service (304), un numéro de fichier et des délimiteurs.

3. Appareil pour recevoir de l'information sur le trafic, l'appareil comportant :
une unité de réception (1, 2) configurée pour recevoir un objet (400) d'un premier type ayant un fichier (40) contenant de l'information sur le trafic et un objet d'un second type incluant de l'information concernant le fichier et de l'information concernant un service d'information sur le trafic fournissant le fichier ;
un premier décodeur (3a) configuré pour extraire le fichier (40) contenant l'information sur le trafic de l'objet (400) du premier type, et l'information concernant le fichier (40) et l'information concernant le service d'information sur le trafic de l'objet du second type ;
un second décodeur (3b) configuré pour déterminer la décodabilité de l'information sur le trafic contenue dans l'information extraite concernant le service d'information sur le trafic, sur la base de l'information extraite concernant le service d'information sur le trafic, et pour déterminer que le fichier doit être décodé soit pour utiliser l'information sur le trafic, soit pour mettre à jour l'information sur le trafic, sur la base de l'information extraite concernant le fichier, et pour décoder le fichier extrait (40) ;
un détecteur de localisation (8) configuré pour obtenir de l'information concernant une localisation actuelle de l'appareil ; et
un moteur de navigation (5),
dans lequel le second décodeur (3b) est configuré pour fournir l'information sur le trafic décodée contenue dans le fichier extrait (40) au moteur de navigation (5),
dans lequel le moteur de navigation (5) est configuré pour stocker l'information sur le trafic décodée et pour afficher une partie de l'information sur le trafic décodée correspondant à des segments routiers appartenant à une zone particulière autour de la localisation actuelle obtenue.

4. Appareil selon la revendication 3, dans lequel un nom de fichier du fichier (40) inclut une identification (303) attribuée au service d'information sur le trafic fournissant l'information sur le trafic, un identifiant de composant de service (304), un numéro de fichier et des délimiteurs.
